# EUROPEAN PATENT APPLICATION

(11) **EP 3 960 434 A2**
(43) Date of publication of application: **02.03.2022**
(21) Application number: 21194168.7
(22) Date of filing: 31.08.2021
(51) Int. Cl.: B29D 30/00

(54) **TIRE WITH COMPOSITE SEALANT LAYER AND METHOD OF MAKING**

(30) Priority: 31.08.2020 US 202017007244
(71) Applicant: The Goodyear Tire & Rubber Company, Akron, OH 44316 (US)
(72) Inventor: DYRLUND, Christopher David, Canton, 44705 (US); BALDAN, Adam Mark, Akron, 44303 (US); ROGENSKI, Elizabeth Amelia, Atwater, 44201 (US)
(74) Representative: Goodyear IP Law

(57) **Abstract**

A method for forming a tire (100) is disclosed, the tire having a tread (120) and at least one ply (190) radially inward of the tread (120). The method comprises applying a composite layer (200) is radially inward of the at least one ply (190) and forming the composite layer (200) comprising the steps: forming a dual layer strip (230) of a first compound (232) and of a second compound (234), wherein the first compound (232) is an air impermeable compound; and the second compound is a sealant compound (234), and then winding the dual layer strip (230) onto a tire building drum. Also, a tire (120) is disclosed having a composite layer (200). The composite layer (200) is located radially inward of a layer of ply (190), preferably radially inward of the radially innermost layer of ply (190) of the tire (100). The composite layer (200) has a first and second laterally outer end (220) formed of a strip of an air impermeable compound, and the composite layer has a middle portion (240) formed of a dual layer strip (230) having a first layer (234) of a sealant compound, and a second layer (232) formed of an air impermeable compound.

## Description

### Field of the Invention

The invention relates in general to tire construction and tire manufacturing, and more particularly to a tire have a built-in sealant layer and an improved method of construction.

### Background of the Invention

Tire manufacturers have progressed to more complicated designs due to an advance in technology as well as a highly competitive industrial environment. In particular, tire designers seek to use multiple rubber compounds in a tire component such as the tread in order to meet customer demands. In order to improve manufacturing efficiency, strip lamination of a continuous strip of rubber is often used to build a tire or tire component.

One tire component of interest to improve is the tire innerliner, which functions to prevent air loss from the tire. Rubbers such as butyl or halobutyl rubber are often used as a major portion of the innerliners. One problem that occurs when strip laminating the tire innerliner is low adhesion of the strip to the adjacent ply layer. Poor adhesion between the inner liner and ply can result in tire defects, resulting in the need to scrap the tire. Increasing the stitcher pressure to ensure adhesion does not solve the problem. Also, using a lower butyl rubber formulation to enhance adhesion typically results in a heavier liner, increasing the weight of the tire.

One tire component of interest to improve is a sealant layer typically applied on the inside of the tire. Post-cure applied sealant application is a complex and expensive process. The problem with a post cure applied sealant layer is that the sealant is subject to cold flow due to centrifugal forces, resulting in noticeable ride harshness after periods of rest. Thus, it is desired to have an improved tire having a layer of sealant that is formed such that it does not migrate after application.

Thus, an improved tire construction and method of making is desired which overcomes the aforementioned disadvantages. Furthermore, an in-line, pre-cure sealant application process via strip lamination is desired to decrease the complexity and cost of applying sealant to the tire. Since the sealant material provides a layer of air permeation resistance, it is also desired to combine the sealant and innerliner components into a single component to reduce tire weight and complexity while maintaining air retention and sealability performance.

### Summary of the Invention

The invention relates to a method in accordance with claim 1 and to a tire in accordance with claim 8.

Dependent claims refer to preferred embodiments of the invention.

The invention provides in a first preferred aspect a method for forming a tire having a composite layer, wherein the composite layer is located radially inward of the ply, wherein the method of forming the composite layer comprises the following steps: forming a dual layer strip of a first compound and a second compound, wherein the first compound is an air impermeable compound and the second compound is a sealant compound, and then winding the dual layer strip onto a tire building drum.

The invention provides a second preferred aspect a tire having a composite layer, wherein the composite layer is located radially inward of a layer of ply, wherein the composite layer has a first and second laterally outer end that is formed of a strip of an air impermeable compound, and the composite layer has a middle portion formed of a dual layer strip having a radially inner layer of a sealant compound, and a radially outer layer formed of an air impermeable compound.

In a preferred aspect of the invention, the dual layer strip forming the middle portion of the composite layer has a volume ratio in the range of 70-90% of the sealant compound and 30% to 10% of the air impermeable compound.

In a preferred aspect of the invention, the dual layer strip forming the middle portion of the composite layer is formed of two layers of spirally wound dual layer strips or of no more than two layers of spirally wound dual layer strips.

### Definitions

"Axial" and "axially" means the lines or directions that are parallel to the axis of rotation of the tire.
"Carcass" means a laminate of tire ply material and other tire components cut to length suitable for splicing, or already spliced, into a cylindrical or toroidal shape. Additional components may be added to the carcass prior to its being vulcanized to create the molded tire.
"Circumferential" means lines or directions extending along the perimeter of the surface of the annular tread perpendicular to the axial direction; it can also refer to the direction of the sets of adjacent circular curves whose radii define the axial curvature of the tread as viewed in cross section.
"Inner Liner" means the layer or layers of elastomer or other material that form the inside surface of a tubeless tire and that contain the inflating fluid within the tire.
"Ply" means a cord-reinforced layer of elastomer-coated, radially deployed or otherwise parallel cords.
"Radial" and "radially" mean directions radially toward or away from the axis of rotation of the tire.
"Laminate structure" means an unvulcanized structure made of one or more layers of tire or elastomer components such as the innerliner, sidewalls, and optional ply layer.

### Brief Description of the Drawings

The invention will be described by way of example and with reference to the accompanying drawings in which:
FIG. 1 is a cross-sectional view of one half of a tire of the present invention;
FIG. 2 is a front perspective view of a dual compound strip;
FIG. 3A is a cross-sectional schematic of a composite inner liner and sealant layer of the present invention, while Fig. 3B is a photograph of an actual tire component formed from dual layer strips comprised of an inner liner and sealant compound;
FIG. 4 is a schematic layup of tire components with a composite inner liner and sealant layer of the present invention;
FIG. 5A is a front view of a dual strip forming apparatus, while Fig. 5B is a close-up view of a nozzle that forms the dual strip; and
Fig. 6 illustrates a spirally wound composite liner being formed on a tire building drum.

### Detailed Description of Example Embodiments of the Invention

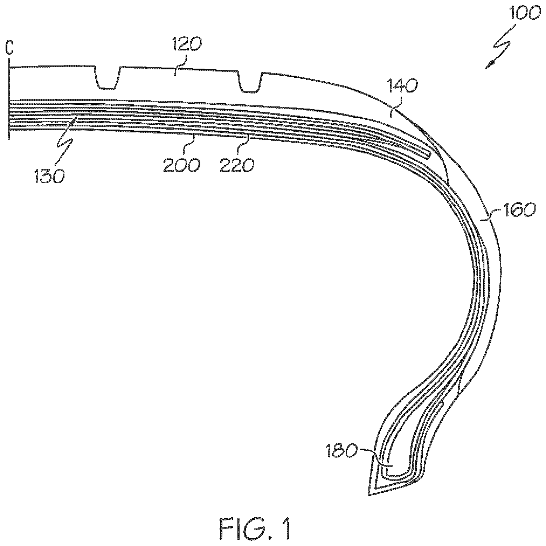

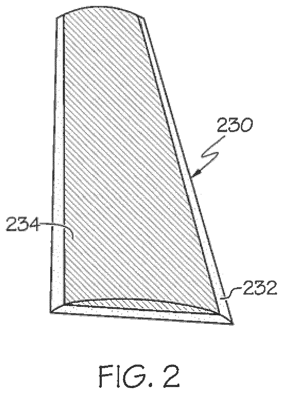

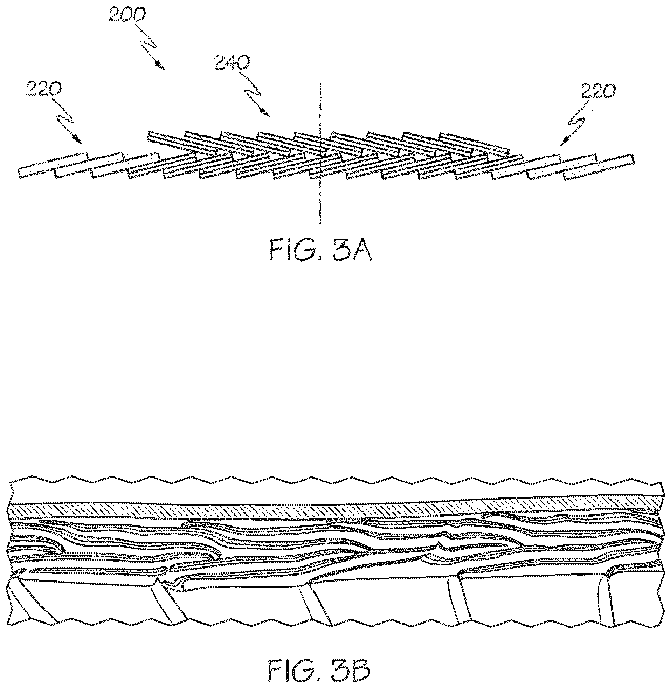

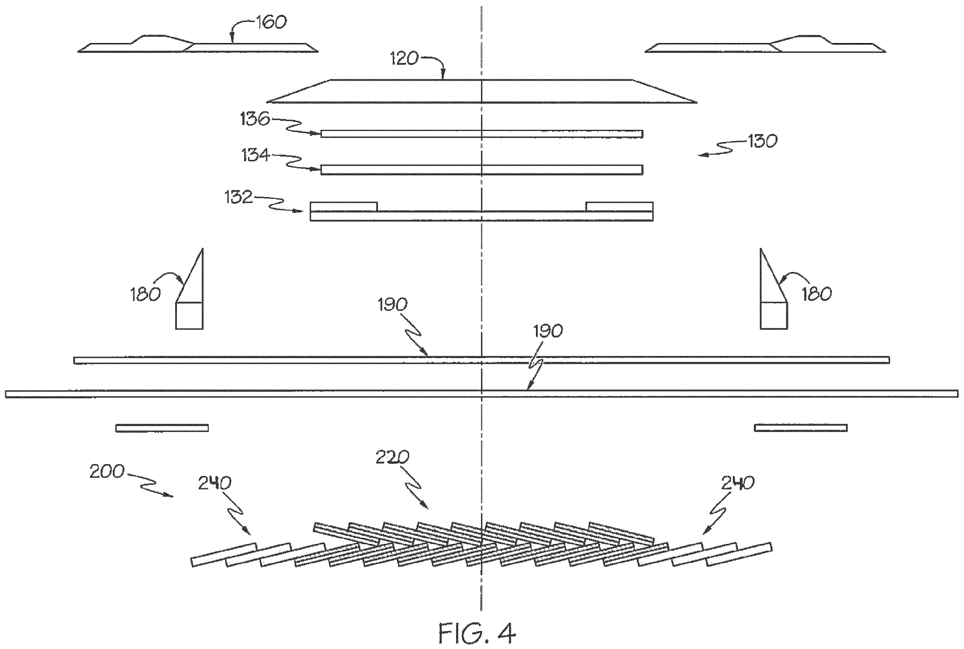

FIG. 1 illustrates one half of a pneumatic radial tire 100 of the present invention. The tire as shown is a passenger tire, but the invention as described herein is not limited to a passenger tire and may be used for other types of tires such as truck or OTR tires. As shown in Figure 4, the tire is a conventional tire and has a ground-engaging tread 120 and a belt package 130 formed of a first breaker 132, a second breaker 134 and a spiral overlay layer 1362. The tire further includes a chafer and sidewall subassembly 160 that extend radially inwards from the shoulders 140 and terminates in a pair of bead portions 180. The tire 100 has a one or more layers of ply 190 that are anchored in a respective bead portion having an apex and bead subassembly 180. As shown in Figure 3a, 3b and Figure 4, a composite layer 200 of the present invention is located radially inward of the ply layer. The composite layer 200 is formed from a continuous dual layer strip 230, as shown in FIG. 2.

The dual layer strip 230 is formed of a first discrete layer 232 of a first compound that is joined to a discrete second layer 234 formed of a second compound. The first and second compounds are different and not mixed together to form the dual layer strip 230 and are only joined together at an interface.

The first compound 232 is preferably formed of an air impermeable material such as butyl, bromobutyl, and halobutyl rubber as well as any material with the air permeability characteristics of butyl, bromobutyl, or halobutyl rubber.

The second compound 234 is preferably a sealant compound derived from a depolymerization of a butyl rubber-based sealant precursor composition, typically containing a rubber reinforcing carbon black filler to render the sealant black in color or containing precipitated silica with only a minimal amount of carbon black, if any, or exclusive of carbon black, together with a colorant to color the sealant layer a color other than black, preferably yellow, or alternatively, a partially organoperoxide-depolymerized butyl rubber as a copolymer of isobutylene and isoprene, wherein said copolymer prior to such depolymerization contains from 0.5 to 5 percent units derived from isoprene, and correspondingly from 95 to 99.5 weight percent units derived from isobutylene.
Other suitable sealant compounds are known to those skilled in the art. For example, see U.S. Patent Nos. 4,895,610, 4,228,839, 4,171,237, 4,140,167, 8,156,979, and 8,293,049 and U.S. Patent Publication Nos. 2003/0230376, 2004/0159386, 2005/0205186, and 2008/0115872.

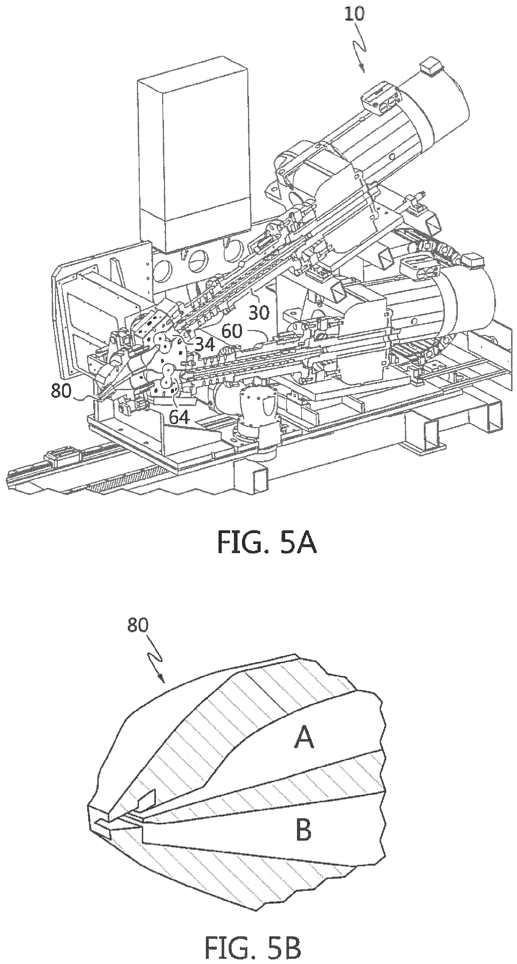

The dual extruder apparatus 10 as shown in Figures 5A and 5B is used to form a continuous dual layer strip 230. The dual extruder apparatus 10 includes a first extruder 30 in fluid communication with a first gear pump 34 for extruding the sealant compound and controlling the amount of the sealant compound with volumetric precision in order to form the top layer 234 of the dual strip 230. The dual extruder apparatus 10 further includes a second extruder 60 in fluid communication with a second gear pump 64 for extruding the inner liner compound with volumetric precision to form the bottom layer 232 of the dual strip 230.

The first and second gear pumps 34, 64 are preferably placed in close proximity to each other so that the outlet channels of the first and second gear pumps are also in close proximity, as shown in FIG. 5A. The outlet channels are fed into a nozzle 80 which forms the dual layer strip 230. The width of the dual rubber strip output from the nozzle orifice is typically 15 mm in width, but may vary in the range of from 3 mm to 30 mm.

The dual extruder apparatus 10 may be used to vary in real time the ratio of the sealant compound to the inner liner compound by varying the ratio of the first gear pump speed to the second gear pump speed. By changing this ratio, the thickness and amount of the sealant compound relative to the thickness and amount of inner liner compound thickness will vary.

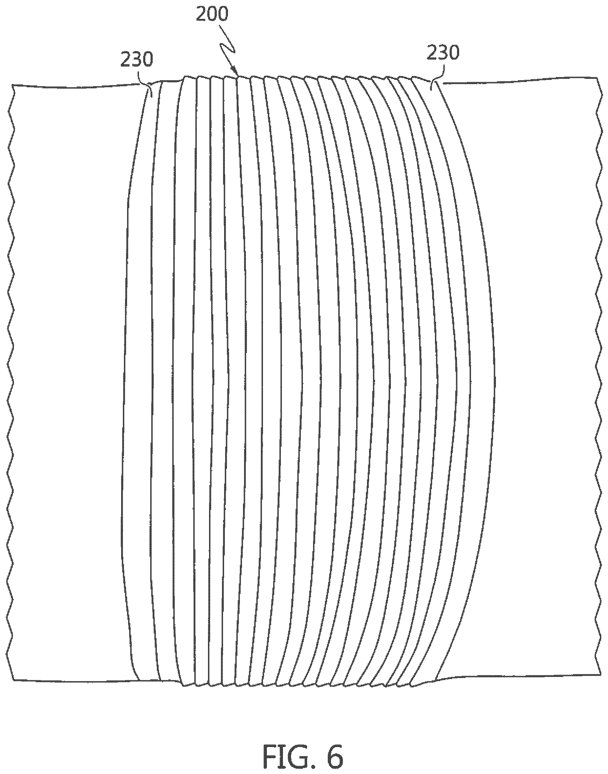

FIG. 3A illustrates a composite layer 200 of the present invention. The composite layer 200 is preferably located radially inward of the ply 190, as shown in Figure 4. The composite layer 200 is formed by spirally winding a dual layer strip 230 onto a rotating tire building drum, as shown in Figure 6. As shown in Fig. 3A, the composition of the dual layer strip is varied. On the axially outer ends 220 of the composite layer 200, the strip is at least 80% inner liner or air impermeable compound and may vary in the range of 70% - 100% inner liner or air impermeable compound. There is preferably a single layer of strip at the axially outer ends.

In the midportion 240 of the composite layer, the dual layer strip composition is in the range of 30 -70% sealant and 70% -30% inner liner. Preferably, the dual layer strip composition is a 50%-50% ratio of sealant to inner liner. As shown in Figure 4, there are two layers of spirally wound dual strips. The inner liner or air impermeable layer of each strip is oriented to be radially inward of the sealant layer.

The thickness of the inner liner layer 232 of the dual layer strip 230 is preferably in the range of from 0.3 mm to 2 mm, and more preferably in the range of from 0.6 to 1.2 mm. The thickness of the sealant layer 234 is preferably in the range of from 3 to 6 mm and more preferably in the range of from 3.5 to 5mm. The overall width of the strip 230 is in the range of from 10 mm to 50 mm, more preferably from 20 to 25 mm.

In this invention, multiple strips of co-extruded innerliner and sealant are applied to the building drum, followed by application of body ply. The multiple layering provides a greater number of smaller sealant pockets. By encapsulating small pockets of sealant with innerliner compound, the invention greatly reduces the problem of cold flow. The invention also has the benefit of improved sealing via multiple layers of sealant and efficiencies gained by applying innerliner with sealant as single component, and ability to reduce innerliner gauge by coextruding with sealant compound. Furthermore, by building this component with the dual extruder apparatus, the composite sealant layer can be built in-line of the tire assembly process, before the tire is cured.

## Claims

1. A method for forming a tire (100), the tire having a tread (120) and at least one ply (190) radially inward of the tread (120), the method comprising applying a composite layer (200) is radially inward of the at least one ply (190), wherein the method comprises forming the composite layer (200) comprising the steps: forming a dual layer strip (230) of a first compound (232) and of a second compound (234), wherein the first compound (232) is an air impermeable compound; and the second compound is a sealant compound (234), and then winding the dual layer strip (230) onto a tire building drum.

2. The method of claim 1 wherein the ratio of the air impermeable compound to the sealant compound is varied across the axial width of the composite layer (200).

3. The method of claim 1 or 2 wherein the air impermeable compound in the dual layer strip (230) is oriented to be radially inward of the sealant compound in the tire (100).

4. The method of at least one of the previous claims wherein the air impermeable compound is butyl rubber or mixtures thereof and/or wherein the sealant compound is derived from a depolymerization of a butyl rubber-based sealant precursor thereof.

5. The method of at least one of the previous claims wherein the dual strip (230) forming a middle portion (240) of the composite layer (200) has a volume ratio in the range of 70- 90% of the sealant compound and 30% to 10% of the air impermeable compound and/or wherein the dual strip (230) forming lateral end portions (220) of the composite layer (200) has less than 10% of the sealant compound.

6. The method of at least one of the previous claims wherein there are at least two layers of the dual strip (230) forming a middle portion (240) of the composite layer (200).

7. The method of at least one of the previous claims wherein the ratio of the volume of the air impermeable compound to the volume of the sealant compound in the dual layer strip (230) is varied by changing the ratio of the speed of a first gear pump (34) to the speed of a second gear pump (64).

8. A tire having a tread (120), at least one ply (190) radially inward of the tread (120) and a composite layer (200), wherein the composite layer (200) is located radially inward of a layer of ply (190), preferably radially inward of the radially innermost layer of ply (190) of the tire (100), wherein the composite layer (200) has a first and second laterally outer end (220) formed of a strip of an air impermeable compound, and the composite layer has a middle portion (240) formed of a dual layer strip (230) having a first layer (234) of a sealant compound, and a second layer (232) formed of an air impermeable compound.

9. The tire of claim 8 wherein the air impermeable compound or the first layer (234) in the dual layer strip (230) is oriented to be radially inward of the sealant compound or the second layer (232) in the tire (100).

10. The tire of claim 8 wherein the air impermeable compound or the first layer (234) in the dual layer strip (230) is oriented to be radially outward of the sealant compound or the second layer (232) in the tire (100).

11. The tire of claim 8, 9 or 10 wherein the dual layer strip (230) is a spirally wound strip and/or wherein there is no further or separate inner liner layer.

12. The tire of at least one of the claims 8 to 11 wherein the middle portion (240) of the composite layer (200) extends from a first shoulder of the tire (100) to a second shoulder of the tire (100).

13. The tire of at least one of the claims 8 to 12 wherein the radial thickness of the dual layer strip (230) is in the range of from 2 to 10 mm.

14. The tire of at least one of the claims 8 to 13 wherein wherein the radial thickness of the sealant layer of the dual layer strip (230) is in a range of from 3 to 6 mm or from 3.5 to 5 mm, and/or the radial thickness of the air impermeable layer of the dual layer strip (230) is in the range of from 0.3 to 2mm or from 0.6 to 1.2 mm.

15. The tire of at least one of the claims 8 to 14 wherein the axial width of the dual layer strip (230) is in the range of 10 to 50 mm or from 20 to 25 mm.
